# EUROPEAN PATENT APPLICATION

(11) **EP 3 187 784 A1**
(43) Date of publication of application: **05.07.2017**
(21) Application number: 16207424.9
(22) Date of filing: 29.12.2016
(51) Int. Cl.: F23R 3/28

(54) **IMPROVED GAS TURBINE COMBUSTER INJECTION ASSEMBLY**

(30) Priority: 29.12.2015 IT UB20159388
(71) Applicant: Ge Avio S.r.l., Rivalta di Torino (IT)
(72) Inventor: TURRINI, Fabio, 10141 TORINO (IT); PESCHIULLI, Antonio, 10137 TORINO (IT); MOTTA, Marco, 10136 TORINO (IT)
(74) Representative: Lovino, Paolo

(57) **Abstract**

An injection assembly (3) for a combustor (1) of a gas turbine (1) has an outer body (10) provided with inlet passages (15a)(16a) for comburent air, a conical tubular portion (22) housed inside the outer body (10) and delimiting partly an inner duct (26) and an outer annular duct (27); a first (29) and a second supply means (30) for supplying a liquid fuel into the inner duct (27) and, respectively, into the outer annular duct (27); at least one circumferential annular seat (44) formed being carried by one of the tubular portion (22) and the outer body (10), so as to collect a mass of liquid fuel advancing in the outer annular duct (22) and make uniform the flow of liquid flowing out of the circumferential annular seat (44).

## Description

The invention relates to an improved gas turbine combustor injection assembly.

In particular, the invention relates to an injection assembly for injecting an air-liquid fuel mixture into a combustion chamber of a gas turbine for an aeronautical/aeroderivative engine.
In the field of gas turbines, it is known to feed the air-liquid fuel mixture towards a combustion chamber of the turbine using a fuel injection, air-fuel mixing assembly of the type described in European patent application no. EP 2 385 307 A1 filed by the applicant.

More specifically, the injection assembly comprises an outer tubular body and an inner conical tubular body, which partially extends inside the outer tubular body, is tapered towards the combustion chamber and separates two air liquid mixing ducts from one another, said ducts being an inner duct and an outer annular duct. The outer annular duct is delimited by the aforesaid outer tubular body.

In each duct, the liquid fuel is introduced through a respective ring of nozzles. The nozzles of the outer annular duct are usually oriented so as to send the liquid fuel towards the inner conical tabular body. However, there are solutions in which the nozzles of the outer annular duct are oriented so as to direct the liquid fuel towards the outer tabular body.

Regardless of the direction along which the liquid fuel is supplied, before entering the combustion chamber, the air and the liquid fuel must be properly mixed depending on the fuel flow rate and on the operating condition of the turbine.

Experiments have shown that, in some operating conditions requesting a high degree of homogenization of the air-liquid fuel mixture sent to the combustion chamber, said mixture was not homogeneous, but, instead, it was different from area to area of the duct. This lack of homogeneity leads to the formation of fumes and, in general, of a great quantity of polluting combustion products.

Experiments have also shown that the lack of homogeneity of the air/liquid fuel mixture was also partly due to a lack of homogeneity in the flow of liquid fuel fed in the outer annular duct, which, instead of being fed in the form of an annular meatus with a substantially constant thickness, as desired, in some operating conditions spontaneously divided itself forming fluid threads or a beam of fuel flows adjacent to one another and fed independently of one another towards the combustion chamber.

The object of the invention is to provide an improved gas turbine combustor injection assembly, which can solve the problem described above in a simple and economic fashion and, in particular, can create, at the inlet of the combustion chamber, a homogeneous air-liquid fuel mixture.

According to the invention, there is provided an improved gas turbine combustor injection assembly, the assembly comprising an outer body having inlet passages for comburent air and a first tubular portion extending coaxially to an axis; a second conical tubular portion housed at least partly inside said outer body and said first tubular portion coaxially to said axis and delimiting partly an inner duct and, with said first tubular portion, an outer annular duct having respective outlets; first and second supply means for advancing a liquid fuel in said inner duct and, respectively, in said outer annular duct, characterized by also comprising, at least, a first continuous circumferential annular seat formed on at least one of said first and second tubular portion and suitable to collect a predefined mass of liquid fuel advancing in said annular duct.

Preferably, in the assembly defined above, the first seat has a constant depth.

The invention will now be described with reference to the accompanying drawings, which show a non-limiting embodiment thereof, wherein:
figure 1 shows, in a cross-sectional view with parts removed for greater clarity, a gas turbine combustor provided with a preferred embodiment of an improved injection assembly according to the invention;
figure 2 is a perspective perspective view, on a larger scale, of the injection assembly of figure 1;
figure 3 shows, in a cross-sectional view and on a significantly larger scale, a detail of figure 1;
figure 4 shows, in a cross-sectional view and on a significantly larger scale, a detail of figure 3;
figure 5 is a cross-section according to line V-V of figure 3;
figures 6 and 7 are similar to figures 3 and 4 and show a variant of a detail of figures 3 and 4; and
figure 8 shows a further variant of a detail of figure 3.

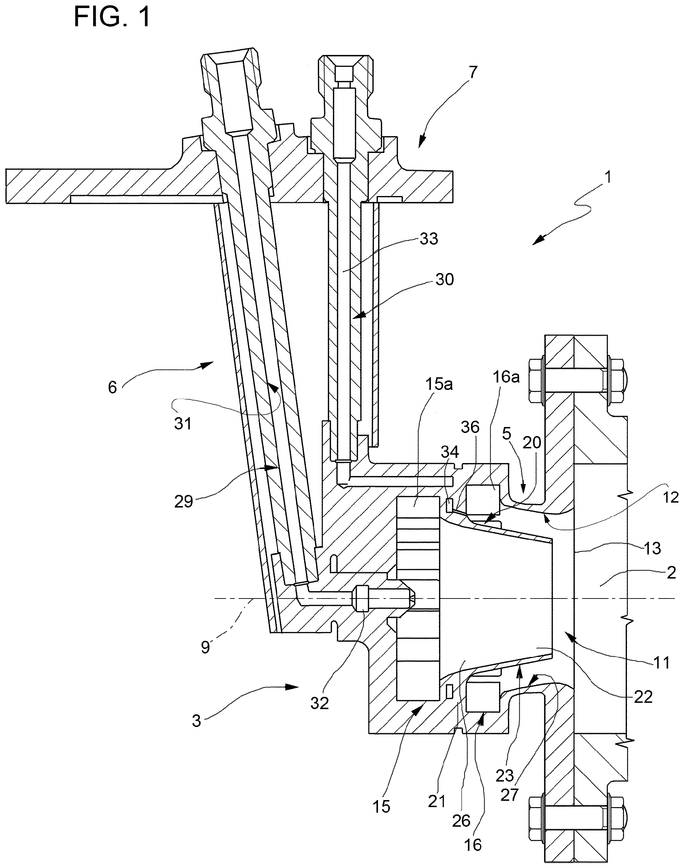

In figure 1, number 1 indicates, as a whole, a gas turbine combustor comprising a combustion chamber 2 and an injection assembly 3 to send a mixture of air and liquid fuel to the combustion chamber 2.

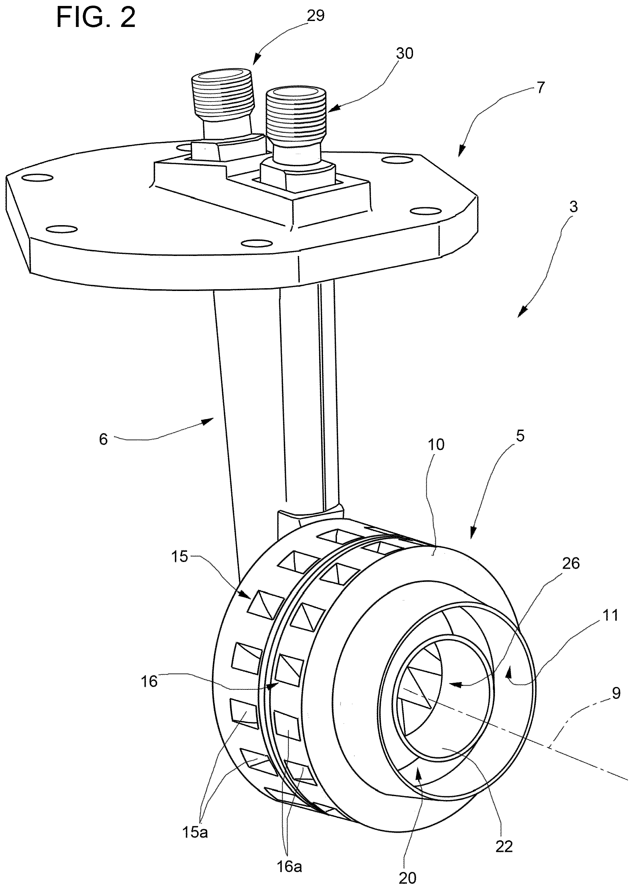

With reference to figures 1 and 2, the assembly 3 comprises an air-liquid fuel supply head 5, which is conveniently manufactured as one single piece, and a support arm 6 for the head 5, which makes up - together with the head 5 - part of a body 7, which is also manufactured as one single piece.

The head 5 projects from the arm 6 coaxially to an axis 9 and comprises a casing or outer tubular body 10, which ends with a tubular portion 11 delimiting a duct 12. The duct 12 communicates with the combustion chamber 2 through an axial outlet opening 13 of its and with the main air flow supply area through two rings 15 and 16, besides one another, made of known shaped openings indicated with 15a and 16a.

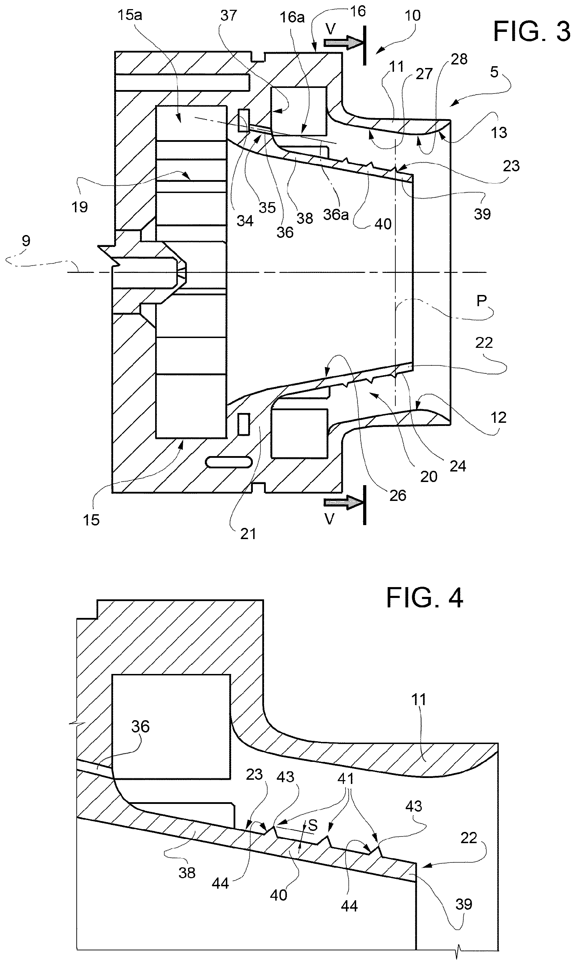

With reference to figures 1 and 3, the duct 12 houses a body 20, which is, in longitudinal section, substantially T-shaped and comprises an annular attachment portion 21, substantially shaped like a plate, coaxial to the axis 9 and extending between the opening rings 15 and 16. The body 20 comprises, furthermore, a conical tubular portion 22, which extends from an inner edge of the portion 21 coaxially to the axis 9, is tapered towards the chamber 2 and towards a free ends of its and is delimited, on the outside, by a surface 23 having a straight generatrix 24 (figure 3). The body 20 partially extends inside the tubular portion 11 and divides the duct 12 into an inner duct 26 communicating with the ring 15 of openings 15a and into an outer annular duct 27. The annular duct 27 communicates with the ring 16 of openings 16a and is delimited, on one side, by the surface 23 and, on the other side, by the inner surface 28 of the tubular portion 11.

With reference to figures 1 and 2, again, the assembly 3 comprises, furthermore, two hydraulic circuits 29 and 39, which are separate from one another and are designed to supply a liquid fuel to the inner duct 26 and, respectively, to the annular duct 27. Given the circuits 29 and 30, the circuit 29 comprises a conveying duct 31 extending through the arm 6 and an injector 32 arranged along the axis 9, whereas the circuit 30 comprises a conveying duct 33 of its own, whose outlet leads into an annular chamber 34 obtained in the annular portion 21 (figure 3).

In the particular example described herein and with reference to figure 3, the circuit 30 comprises, furthermore, a ring 35 of adjusted straight ducts 36 extending through the portion 21 and having respective axes 36a that are parallel to the generatrix 24. Each duct 36 has a relative inlet communicating with the chamber 34 and a relative outlet obtained through a surface 37 and in a position spaced apart from the surface 23. The surface 37 extends orthogonally to the axis 9 and delimits the portion 21.

In this way, the ducts 36 direct the liquid introduced into the annular duct 27 towards a smooth portion of the surface 23 externally delimiting an inlet section 38 of the conical tubular portion 22 extending starting from the surface 37.

With reference, again, to figure 3 and, in particular, to figure 4, the conical tubular portion 22 comprises, furthermore, an outlet section 39, which is also delimited by a smooth surface, and an intermediate section 40 extending between the sections 38 and 39 and delimited, in the example shown herein, by a corrugated surface, as explained more in detail below.

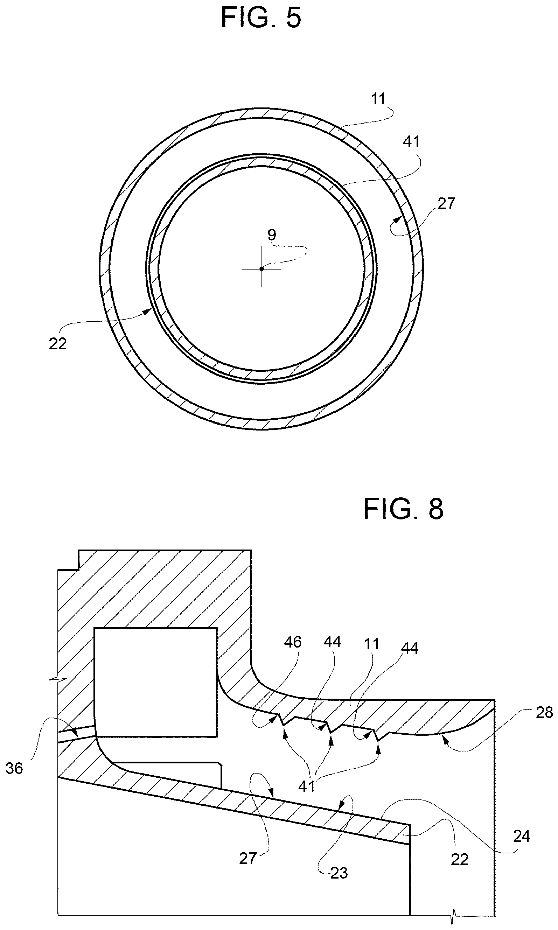

With reference to figures 4 and 5, the section 40 comprises a plurality of continuous circumferential ribs, in the case described herein three ribs, which are spaced apart from one anther in the feeding direction of the liquid fuel and along the axis 9.

According to a variant that is not shown herein, the intermediate section 40 comprises one single circumferential rib 41.

Regardless of their number, each rib 41 has a thickness S, measured starting from the surface 23 in a radial direction, that is constant along the entire length of the rib 41 itself. The thicknesses S of the ribs 41 are conveniently equal to one another, but they could also be different. Preferably, the thickness S ranges from 1/20 to 1/5 of the difference between the corresponding inner and outer radius of the annular duct.

Each rib 41 also has a radial half-section (figure 5) with a triangular shape and a circular perimeter edge 43.

Alternatively, each rib 41 has a radial half-section with a trapezoidal shape, preferably - though not necessarily - tapered towards the inside of the annular duct 27, or with a square, rectangular or circular shape. In the last cases, each rib 41 is delimited by a free end surface, which is coaxial to the axis 9.

Regardless of the geometry of the radial half-section, each rib 41 is coupled to the intermediate section 40 of the conical body 20 in a fluid-tight manner. Preferably, each rib 41 and the body 20 or at least the section 40 of the tubular portion 22 make up part of a body manufactured as one single piece, as you can see in figures 4 and 5, for example through the forming technique known as "additive manufacturing".

Alternatively, each rib 41 consists of a relative closed ring, which is distinct from the body 20 and is fitted and forced on the section 40 with an axis of its coaxial to the axis 9.

Regardless of how the ribs 41 are coupled to the intermediate section 40, each rib 41 lies on a plane P of its that is orthogonal to the axis 9 and spaced apart from the other planes.

Regardless of the number, the geometry and the relative position of the ribs 41 along the annular portion 22, each rib 41 defines a barrier to the feeding movement of the liquid and partially delimits a relative continuous circumferential annular seat 44 extending along the outer periphery of the annular portion 22 and suited to collect, in use, a predefined mass of liquid fuel fed in the annular duct 27.

As the ribs 41 have a constant thickness S, each seat 44 has a constant depth that is equal to, or different from, the one of the other seats 44.

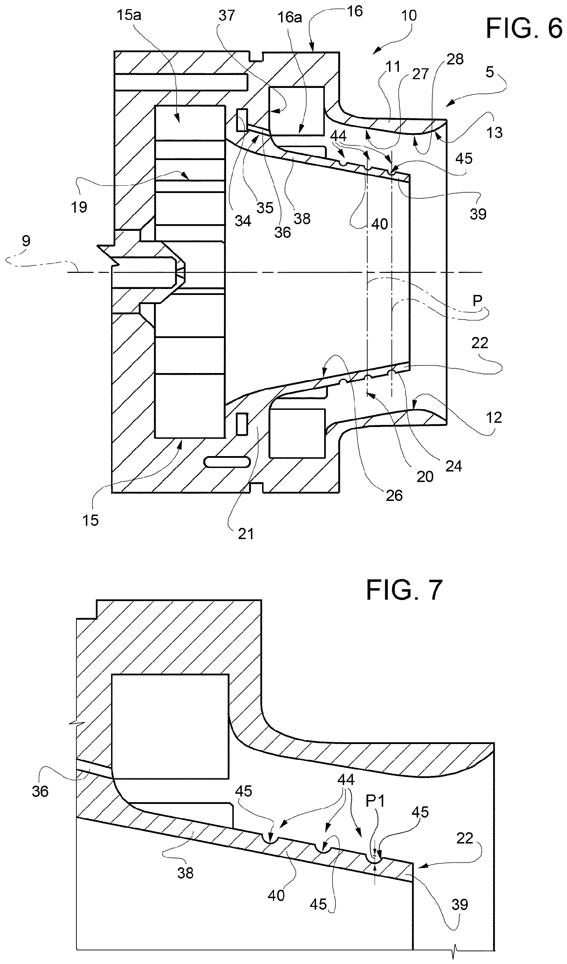

In the variant shown in figures 6 and 7, the assembly 3 has no ribs 44 and each seat 44 is defined by a relative circumferential grooves 45 obtained in the wall of the tubular portion 22. The grooves have constant or variable depth, measured in a circumferential direction. Conveniently, the grooves 45 have a depth ranging from 0.1 to 3 millimetres.

In the further variant shown in figure 8, the channels 36 are inclined relative to the generatrix, so as to direct the liquid fuel towards an inlet section 46 of the surface 28. In this variant, the ribs 41, conveniently with a shape and a geometry equal to the ones carried by the tubular portion 22, are carried by the tubular portion 11 (figure 8) and extend inside the annular duct 27 towards the surface 23. In this position, again, each rib 41 makes up an obstacle to the feeding movement of the liquid and defines a relative seat 44 for collecting a mass of liquid fuel.

Like the case of the tubular portion 22, even for the tubular portion 11, the ribs 41, according to a variant that is not shown herein, are replaced by grooves obtained in the wall of the tubular portion 11.

Regardless of the fact that the collecting seats 44 are obtained on the tubular portion 22 or on the tubular portion 11, the seats 44 generate a liquid barrier crossed by the liquid flowing through the annular duct 27 towards the combustion chamber 2.

Experiments have shown that the presence of the liquid barrier and, in particular, the fact that the liquid fuel is forced to pass over a continuous circumferential obstacle defined by the ribs 41 or by the grooves 45 produce a mixing of the liquid fuel getting in and create, at the outlet, a compact liquid meatus, which is uniform and has a substantially constant thickness.

In other words, compared to known solutions, the presence of the ribs 41 or of the grooves 45 prevents the liquid from following preferential feeding paths and, therefore, avoids the formation of flows or fluid threads transversely spaced apart from one another.

The formation of a compact meatus without discontinuity, obtained with the invention, allows manufacturers not only to obtain an optimal air-liquid mixing in each section of the annular duct 27, but also, especially, to obtain a mixture entering the chamber 2 that is perfectly homogeneous and does not change in time, whatever the quantity of air and/or the flow rate of the fuel introduced through the circuits 29 and 30.

The presence of the liquid fuel collecting seats 44, then, increases the liquid fuel-air interface area, which leads, compared to known solutions, to an improvement of the air-fuel mixture entering the combustion chamber 2.

The thrust exerted by the air upon the liquid on the inside of the annular duct 27 generates a partial evaporation of the liquid fuel in the annular duct 27 and a simultaneous settlement of the remaining drops of liquid fuel on the surface against which the liquid flowing out of the seats 44 flows, thus stabilizing the liquid fuel film. Close to the outlet opening 13, the strong turbulence generated by the mixing of the air flows coming from the ducts 26 and 27 contributes to the atomization of the film before entering the combustion chamber 2.

This translates into a significant reduction of the polluting products resulting from the combustion, especially as the temperature in the combustion chamber 2 increases.

Owing to the above, it is evident that assembly 3 described herein can be subject to changes and variations, without for this reason going beyond the scope of protection set forth in the independent claims. In particular, the ribs 41 or the grooves 45 and, therefore, the seats 44 could be available in a number different from the one described above by mere way of example, have geometries that are different from the one mentioned above and/or a different spacing along the tubular portions 11 or 22.

Finally, the seats 44 could be obtained partly on the tubular portion 11 and partly on the tubular portion 22, with the double purpose of making the flow of liquid fuel uniform, on the one hand, and of increasing the interaction of the air with the liquid fuel, on the other had, thus increasing the turbulence of the air. As a matter of fact, in these conditions the turbulence of the air getting in is amplified by the contact with the ribs 41 or the grooves 45 that are not affected by the liquid fuel.

Moreover, at least one of the seats 44 could be defined partly by a relative rib 41 and partly by a relative groove 45. In this case, the groove 45 could have a constant depth, equal to or different from the one of the possible other grooves 45, or a variable depth.

## Claims

1. An improved gas turbine combustor injection assembly, the assembly comprising an outer body having inlet passages for comburent air and a first tubular portion extending coaxially to an axis; a second conical tubular portion housed at least partly inside said outer body and said first tubular portion coaxially to said axis and delimiting partly an inner duct and, with said first tubular portion, an outer annular duct having respective outlets; first and second supply means for advancing a liquid fuel in said inner duct and, respectively, in said outer annular duct, **characterized by** also comprising at least a first continuous circumferential annular seat formed on at least one of said first and second tubular portion and suitable to collect a predefined mass of liquid fuel advancing in said annular duct.

2. An assembly according to claim 1, **characterized in that** said first seat has a constant depth.

3. An assembly according to claim 1 or 2, **characterized by** also comprising at least a second continuous circumferential annular seat set apart from said first seat in an advancing direction of said liquid fuel and placed upstream from or in cascade with respect to said first seat.

4. An assembly according to claim 1, **characterized by** comprising at least one first continuous circumferential annular rib projecting into said annular duct from at least one of said first and said second tubular portion; said first rib delimiting at least partly said first annular seat and being passed over by said fluid advancing in said annular duct.

5. An assembly according to claim 4, **characterized by** comprising at least one second continuous circumferential annular rib extending into said annular channel from the same tubular portion from which said first rib extends and in a position spaced apart from said first rib in an advancing direction of said liquid fuel to delimit at least partly a second collecting seat for the liquid fuel arranged upstream from or in cascade with respect to the first collecting seat.

6. An assembly according to claim 4 or 5, **characterized in that** at least said first rib has a constant thickness measured in a radial direction.

7. An assembly according to claim 4 or 5, **characterized in that** at least said first rib has a circular perimeter edge or a free end surface coaxial with said axis.

8. An assembly according to claim 4 or 5, **characterized in that** at least said first rib is coupled to the respective said fluid-tight conical portion.

9. An assembly according to claim 4 or 5, **characterized in that** at least said first rib is defined by an annular body fitted onto said second tubular portion or inserted inside said first tubular portion.

10. An assembly according to claim 4 or 5, **characterized in that** at least said first circumferential rib and the respective said tubular portion constitute part of a body formed in one piece.

11. An assembly according to claim 4 or 5, **characterized in that** at least said first rib extends from an outer surface of said second conical tubular portion.

12. An assembly according to claim 4 or 5, **characterized in that** at least said first rib lies in a plane perpendicular to said axis.

13. An assembly according to claim 1, **characterized in that** said first seat is defined at least in part by a first continuous circumferential groove formed on least one of said first and second tubular portion; said first groove being filled with said fluid and passed over by the fluid advancing into said annular duct.

14. An assembly according to claim 13, **characterized by** comprising at least a second continuous circumferential annular groove formed on the tubular portion from which said first groove extends and in a position spaced apart from said first groove in an advancing direction of said liquid fuel; said second groove delimiting at least partly a second collecting seat for the liquid fuel arranged upstream from or in cascade with respect to the first collecting seat.

15. An assembly according to claim 13 or 14, **characterized in that** at least said first groove has a depth measured in a radial direction constant or variable.

16. An assembly according to claim 13 or 14, **characterized in that** at least said first groove is coaxial with said axis.

17. An assembly according to claim 13 or 14, **characterized in that** at least said first groove lies in a plane perpendicular to said axis.
